# EUROPEAN PATENT SPECIFICATION

(11) **EP 3 999 197 B1**
(45) Date of publication and mention of the grant of the patent: **31.12.2025**
(21) Application number: 20743049.7
(22) Date of filing: 20.07.2020
(51) Int. Cl.: A63B 69/36, G09B 19/00

(54) **SYSTEM FOR ASSISTED TRAINING OF A PLAYER FOR THE GAME OF GOLF**
SYSTEM FÜR UNTERSTÜTZTES TRAINING EINES SPIELERS FÜR DAS GOLFSPIEL
SYSTÈME D'AIDE À L'ENTRAÎNEMENT POUR JOUEUR DE GOLF

(30) Priority: 18.07.2019 IT 201900012291
(43) Date of publication of application: 25.05.2022
(73) Proprietor: TYG S.r.l., 25038 Rovato (BS) (IT)
(72) Inventor: LANCINI, Marco, 25030 Adro (Brescia) (IT); MUTTI, Renato, 25030 Erbusco (Brescia) (IT); CONFALONIERI, Massimo Luigi, 24040 Sale Marasino (Brescia) (IT)
(74) Representative: Penza, Giancarlo
(86) International application number: PCT/IB2020/056796
(87) International publication number: WO 2021/009732

(56) References cited:
- GB-A- 2 512 380
- US-A1- 2002 004 723
- US-A1- 2002 161 461
- US-A1- 2015 094 168
- US-A1- 2015 105 172

## Description

### FIELD OF APPLICATION

The present invention relates to a system for assisted training of a player for the game of golf. A conventional golf training system is known from US 2015105172 A1.

In particular, the present invention relates to a system for assisted training of a player for the game of golf in reference to a "training" phase where the player tries different shots to improve his practice and to be able to transfer the experience gained to a real situation of playing on the playing course.

In training for the game of golf, players practice on a practice playing course where there are a number of flags and/or targets at different distances. The player chooses a club and tries a shooting technique as a function of the position of the flag and/or the distance of the target.

Unfortunately, it is not possible to provide for the presence of a personal trainer who constantly supports players both for reasons of costs and timing.

The object of the present invention is to create a fully automated system for assisted training of a player for the game of golf.

A particular object of the present invention is to create a system for assisted training of a player for the game of golf which allows a player a self-assessment, regardless of the presence of a personal trainer.

A further object of the present invention is to create a system for assisted training of a player for the game of golf which allows a player to evaluate his progress in learning the practice in a fully-automated manner.

### SUMMARY OF THE INVENTION

These and other objects are achieved by a system for assisted training of a player for the game of golf according to what is disclosed in claim 1.

The proposed solution of the invention provides that a system for assisted training of a player for the game of golf guides the player during the playing phase on a competition playing course by giving the player an elaborated series of information gained on the training playing courses.

The invention, as described, achieves the following technical effects:
- provides the player with a self-assessment mode;
- assesses the degree of learning of the game;
- allows the player to transfer the experiences gained when moving to playing on the playing course;
- allows the collection of data from all the training sessions;
- normalises and provides the data collected in the training sessions to generate efficient information to aid making shots when on the playing course.

The technical effects/advantages mentioned, and other technical effects/advantages of the invention, will emerge in further detail from the description provided herein below of an example embodiment provided by way of approximate and non-limiting example with reference to the appended drawings.

### BRIEF DESCRIPTION OF THE DRAWINGS

Figure 1 shows a block diagram of the system of the invention.
Figure 2 shows a first processing unit comprised in the system of Figure 1 in detail.
Figures 3 and 4 show a second processing unit comprised in the system of Figure 1 in detail.
Figure 5 schematically shows an exit interface of the system of the invention.

### DETAILED DESCRIPTION

The invention describes a system for assisted training of a player G for the game of golf.

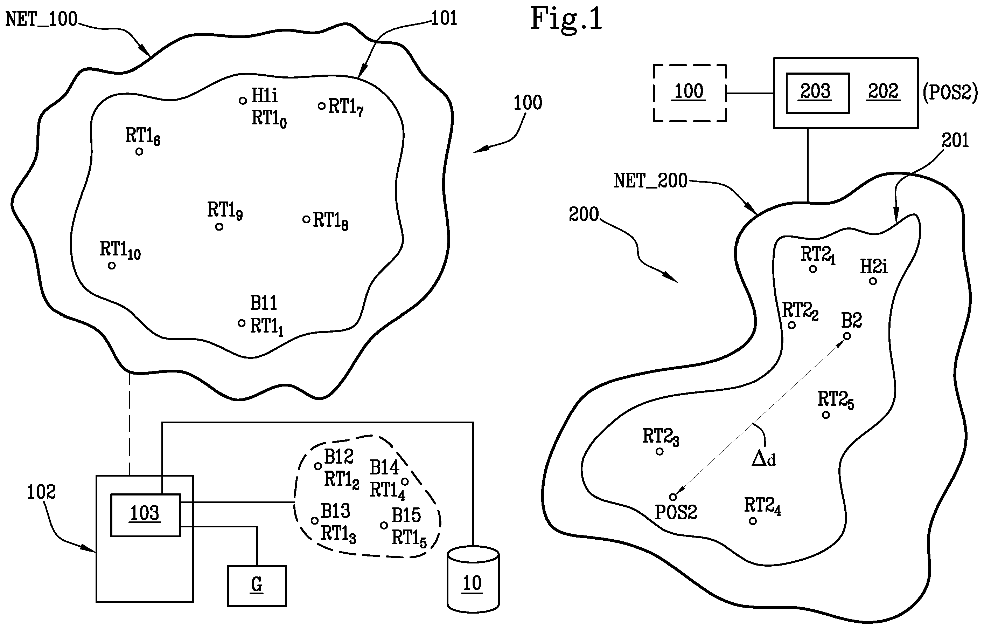

With general reference to Figure 1, the system of the invention comprises a playing data generation subsystem 100 in data communication with a playing data processing subsystem 200.

The playing data generation subsystem 100 is associated with a first georeferencing network NET_100 which maps a training playing course 101 by means of a plurality n of primary transceiver devices RT1ⱼ (j=k..k+n).

A first primary transceiver device RT1₀ is positioned at a primary target H1i of the training playing course 101.

In particular, primary target H1i is intended as, on the training playing course, an area of the course on which the player wants the ball to arrive as a result of the shot made, which area can be identified by a flag, a totem, a text, a coloured rug, a highlighted area or the like.

The purpose of each shot on the training playing course is not, therefore, to shoot the ball into the hole - the final goal of the game of golf - but to arrive with the ball as close as possible to the selected target; at each shot the player is allowed to verify the accuracy of his shot, that is, the distance from the selected target and the length of the shot itself.

In a particular case, the primary target H1i may be represented by a hole for golf balls.

Preferably, the primary transceiver devices RT1j are RFID transceivers.

According to the invention the playing data generation subsystem 100 comprises a first plurality of golf balls B1j (j=1..k-1) each equipped with one of the primary transceiver devices RT1ⱼ (j=1..k-1) and a first electronic device 102 arranged for an interfacing between the player G and the playing data generation subsystem 100.

Preferably, the first electronic device 102 comprises a portable electronic device, preferably one of a smartphone, a tablet, a PDA, a smart watch or the like.

The first electronic device 102 is in data connection with a first processing unit 103.

In the course of the present description and in the following claims, the first processing unit 103 will be described as logically divided into distinct functional modules (memory modules or operating modules) which perform the described functions.

This first processing unit 103 can comprise a single electronic device, appropriately programmed to perform the functionalities described, and the different modules can correspond to hardware entities and/or software routines that are part of the programmed device.

Alternatively, or in addition, these functions can be performed by a plurality of electronic devices over which the aforesaid functional modules can be distributed.

The first processing unit 103 can also make use of one or more processors for execution of the instructions contained in the memory modules.

The aforementioned functional modules can also be distributed on different local or remote computers, depending on the architecture of the network in which they reside.

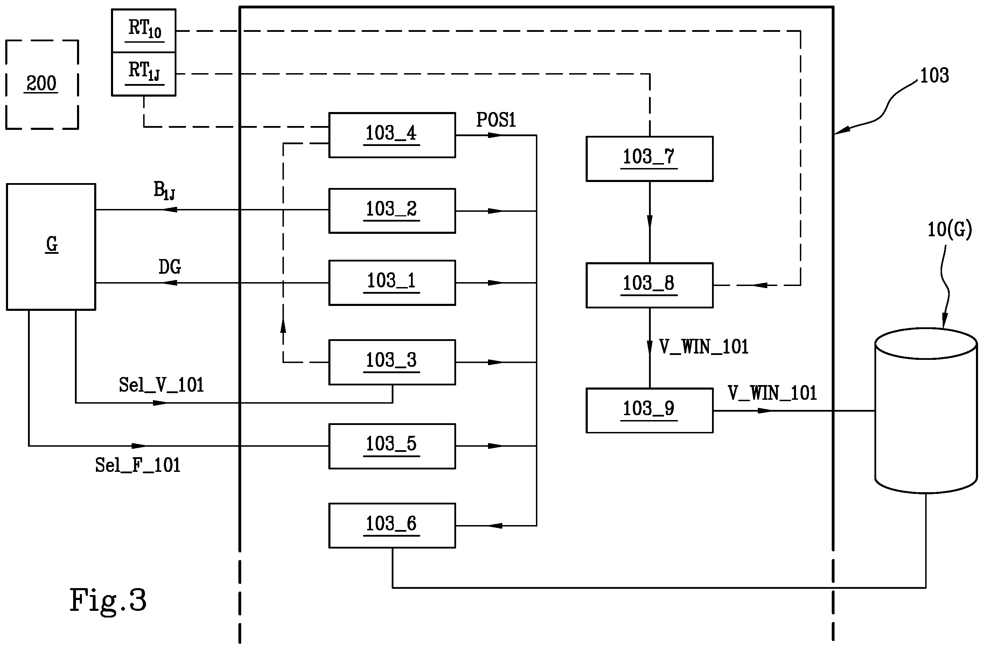

According to the invention, with particular reference to Figure 3, the first processing unit 103 is configured to:
recognise the player G;
detect a virtual training playing course selected by the player G;
identify a first position Pos1 of the player on the training playing course 101;
detect first selected irons Sel_F_101 for playing on the training playing course 101;
associate the plurality of golf balls B1j with the player G.

In detail, with particular reference to Figure 3, the first processing unit 103 comprises a first detection module 103_1 configured to recognise the player G; in other words, the module is configured to detect data DG of the player G necessary for player identification and to enable the player to be able to play on the training playing course.

To allow the golf balls B1j, in particular, to be associated with the player G, after having been recognised, i.e., after having opened a practice session, the player must perform the following actions:
- **scan a QR** code provided on a special ball distributor, which **QR** code identifies the distributor and the practice playing course; in this way, the **QR** code is associated with the player, in particular with the practice session opened;
- wait for the distributor to dispense a number "n" of balls B1j which fall into a basket and are uniquely associated with the practice session of the player G by means of an antenna placed near the basket and arranged to read from the primary transceiver devices RT1ⱼ (j=1..k-1), in particular RFID, associated with the balls.

In particular, the antenna can be placed in a mat on which the basket for collecting the balls is placed.

With the described mode, the balls remain associated with the player G until the user completes the playing session, or until they are identified by a primary transceiver device RT1₀, i.e., by a device positioned at one or more targets identified in the practice playing course, or until a time "t" of inactivity passes.

In order to implement the interactions between player G and the playing data generation subsystem 100, the first processing unit comprises an association module 103_2 configured to associate the plurality of golf balls B1j with the player G.

The association module 103_2 is configured to:
- receive from the electronic device 102 the scanned **QR** code provided on the ball distributor, which **QR** code identifies the distributor and the practice playing course; in this way associating the **QR** code with the player G, in particular to the practice session opened;
- instruct the ball dispenser to dispense the number "n" of balls, preferably in a basket;
- receive, by means of an antenna placed near the basket and arranged to read from the primary transceiver devices RT1j (j=1..k-1), the particular RFIDs, identification data of the balls B1j which are then associated with the practice session of the player G.
- maintain the association of the balls with the player G until the user completes the playing session, or until they are identified by a primary transceiver device RT1₀, i.e., by a device positioned at one or more targets identified in the practice playing course, or until a time "t" of inactivity passes.

The first processing unit further comprises a second detection module 103_3 configured to detect a virtual training playing course Sel_V_101 selected by the player G.

The first processing unit comprises a localisation module 103_4 configured to identify a first position Pos1 of the player on the training playing course 101; the localisation takes place by georeferencing the primary transceiver devices RT1ⱼ based on the selected virtual training playing course Sel_V_101, so as to simulate a training for the player G on the chosen virtual training playing course.

The first processing unit further comprises a third detection module 103_5 configured to detect the first selected irons Sel_F_101 for playing on the training playing course 101.

The first processing unit comprises, lastly, a first sending module 103_6 configured to send at least all of the data detected by the modules described to a playing data database 10 so that they are logically stored and associated with the player G.

The playing data generation subsystem 100 therefore also comprises a database 10 arranged to comprise at least the data detected by means of the first processing unit 103 and relating to the playing on the selected virtual training playing course Sel_V_101 for the recognised player G.

According to the invention, the first processing unit 103 is further configured to
detect a launch of the golf ball B1j as a function of signals received from the primary transceiver devices RT1j;
calculate a current success value V_win_101 of the launch on the training playing course 101, as a function of a signal received from the first primary transceiver device RT1₀;
store in the database 10, for the player G, the current success value V_win_101 relating to the playing on the selected training playing course Sel_V_101;
In detail, the first processing unit 103 comprises a fourth detection module 103_7 configured to detect the launch of the golf ball B1j as a function of signals received from the primary transceiver devices RT1j.

The first processing unit 103 further comprises a first calculation module 103_8 configured to calculate the current success value V_win_101 of the launch, on the training playing course 101, as a function of the launch that has taken place and the signal received from the first primary transceiver device RT1₀.

The first processing unit 103 further comprises a second sending module 103_9 configured to send to the database 10, for the player G, the current success value V_win_101 relating to the playing on the selected training playing course Sel_V_101, so that it is stored.

According to the invention, a rating for the player can also be calculated in order to evaluate the improvement of the player's performance.

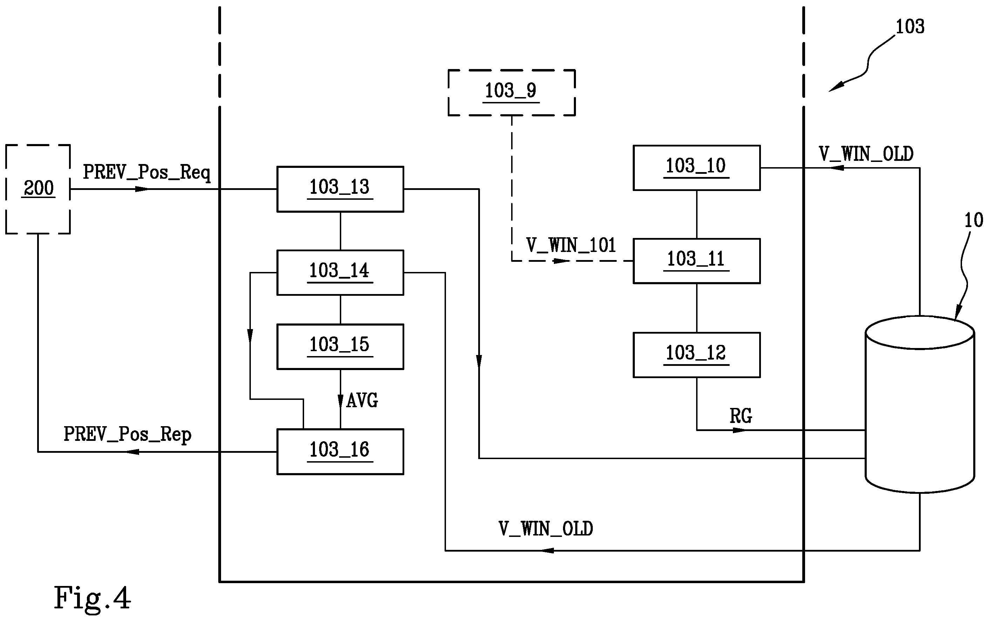

With particular reference to Figure 4, the first processing unit 103 comprises a first loading module 103_10 configured to load a log of success values V_win_OLD from the database 10.

The first processing unit 103 further comprises a comparison module 103_11 configured to make a comparison between the log of success values V_win_OLD and the current success value V_win_101.

The first processing unit 103 further comprises a processing module 103_12 configured to generate a rating signal RG for the player G as a function of the comparison carried out.

The system of the invention comprises a playing data processing subsystem 200.

With reference to Figure 1, the subsystem 200 is associated with a second georeferencing network NET_200 which maps a competition playing course 201.

In one embodiment, the mapping occurs via a plurality n of secondary transceiver devices RT2ⱼ (j=k..k+n), in which a first secondary transceiver device RT2₀ is positioned at a target area H2i of the competition playing course 201.

Preferably, the target area H2i is a hole in the competition playing course 201.

Preferably, the secondary transceiver devices RT2j are RFID transceivers. The playing data processing subsystem 200 comprises at least one, in particular a second plurality of golf balls B2j (j=1..k-1) each equipped with one of the secondary transceiver devices RT2ⱼ (j=1..k-1).

In a second embodiment, the second georeferencing network NET_200 is a GPS-based network or the like.

In this embodiment, the at least one ball B2j lacks transceiver devices.

The playing data processing subsystem 200 further comprises a second electronic device 202 arranged for an interfacing between the player G, the playing data generation subsystem 100, and the playing data processing subsystem 200.

The second electronic device 202 is geolocalisable in real time in a playing position Pos2 on the competition playing course 201.

Preferably, the second electronic device 202 comprises a portable electronic device, preferably one of a smartphone, a tablet, a PDA, a smart watch or the like.

According to the invention, the second electronic device 202 is in data connection with a second processing unit 203.

In the course of the present description and in the following claims, the second processing unit 203 will be described as logically divided into distinct functional modules (memory modules or operating modules) that perform the described functions.

This second processing unit 203 can comprise a single electronic device, appropriately programmed to perform the functionalities described, and the different modules can correspond to hardware entities and/or software routines that are part of the programmed device.

Alternatively, or in addition, these functions can be performed by a plurality of electronic devices over which the aforesaid functional modules can be distributed.

The second processing unit 203 can also make use of one or more processors for execution of the instructions contained in the memory modules.

The aforementioned functional modules can also be distributed on different local or remote computers, depending on the architecture of the network in which they reside.

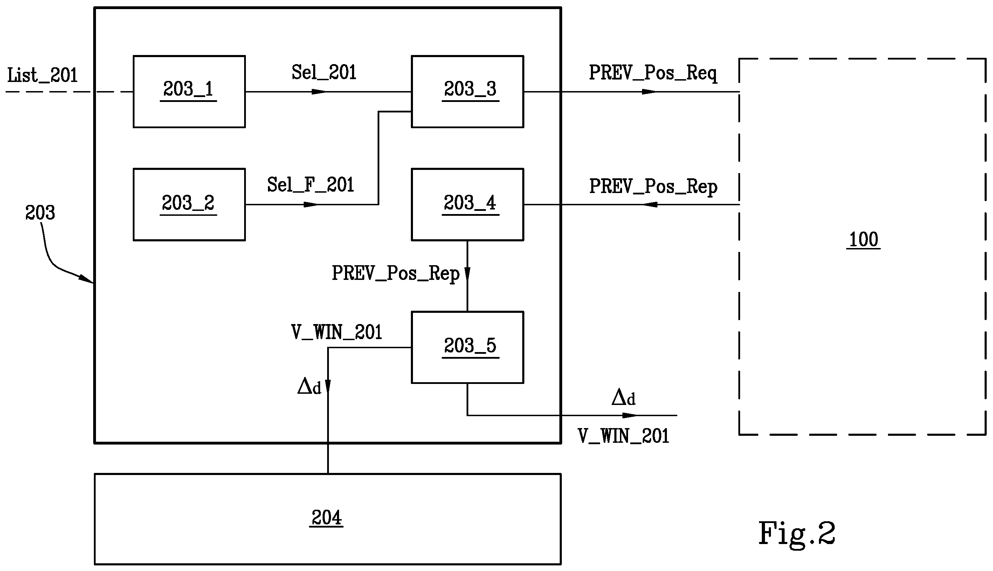

With particular reference to Figure 2, the second processing unit 203 is configured to select a competition playing course Sel_201 from a list of competition playing courses list_201; in this way a corresponding association is determined between the selected playing course Sel_201 and the second georeferencing network NET_200.

A first selection module 203_1 is configured for this purpose.

The second processing unit 203 is further configured to select second irons sel_F_201 for playing on the competition playing course 201.

A second selection module 203_2 is configured for this purpose.

The second processing unit 203 is further configured to send to the playing data generation subsystem 100 a prediction request signal Prev_Pos_Req of a position of the ball B2j in anticipation of a shot on the selected competition playing course sel_201, as a function of the selected second irons Sel_F_201 for playing on the competition playing course.

Preferably, the prediction request signal Prev_Pos_Req further comprises data relating to the type of ball P_ball used in the competition.

A fourth sending module 203_3 is configured to send the signal Prev_Pos_Req.

In detail, the second processing unit 203 is configured to send the prediction request signal Prev_Pos_Req to the first processing unit 103.

The first processing unit 103 is configured to receive the prediction request Prev_Pos_Req.

In other words, with particular reference to Figure 4, a first receiving module 103_13 is configured to receive the prediction request Prev_Pos_Req.

The first processing unit 103 is further configured to access the database 10 and import success values V_win_101 for the player G obtained with the first irons Sel_F_101 where the first irons correspond to the second irons Sel_F_201, selected on the playing course.

Preferably, these success values V_win_101 comprise a log of success values V_win_OLD and/or an average AVG of the log of the success values V_win_OLD.

In other words, with particular reference to Figure 4, a second loading module 103_14 is configured to access the database 10 and import success values V_win_101 for the player G obtained with the first irons Sel_F_101 corresponding to the second irons Sel_F_201.

The first processing unit 103 is preferably further configured to
calculate an average AVG of the log of success values V_win_OLD.

In other words, with particular reference to Figure 4, a second calculation module 103_15 is configured to calculate an average AVG of the log of success values V_win_OLD.

The first processing unit 103 is further configured to send the success values V_win_101 to the second processing unit as a response signal Prev_Pos_Rep.

In other words, with particular reference to Figure 4, a third sending module 103_16 is configured to send success values V_win_101 to the second processing unit as a response signal Prev_Pos_Rep.

Preferably, as already mentioned, these success values V_win_101 comprise a log of success values V_win_OLD and/or an average AVG of the log of the success values V_win_OLD.

The second processing unit 203 according to the invention is further configured to receive from the playing data generation subsystem 100 a response signal Prev_Pos_Rep generated as a function of the success values V_WIN_101 of the player G on the training playing course 101 with the selected second irons Sel_F_201 for playing on the competition playing course 201.

The technical effect achieved is an automated generation of efficient information; that is, the response signal Prev_Pos_Rep, to aid making the shot on the competition playing course.

In fact, the response signal Prev_Pos_Rep is generated as a function of the success values V_WIN_101, but with the selected second irons Sel_F_201 for playing on the competition playing course 201.

In other words, the system of the invention exploits success values V_win_101 on the training playing course to instruct the processing unit 203 to generate a competition playing course success value.

A second receiving module 203_4 is configured for this purpose.

The second processing unit 203 is further configured to calculate a current success value on the playing course V_WIN_201 as a function of the response signal Prev_Pos_Rep, the real playing position Pos2 and the selected competition playing course sel_201.

A third calculation module 203_5 is configured for this purpose.

Preferably, the response signal Prev_Pos_Rep comprises a shot distance Δd predicted from the playing position Pos2 on the competition playing course 201 with the selected second irons Sel_F_201.

In other words, the shot distance is the distance between the position Pos2 and the position of the golf ball at the point where it stops after the shot.

Preferably, the response signal Prev_Pos_Rep comprises a correction factor K applied as a function of the type of ball P_ball used in the competition playing course so that the response signal is correctly derived from the success value V_win_101 obtained with the type of ball used in the practice playing course P_B1j.

According to the invention, the correction factor is defined based on the make and model of the ball P_ball used on the competition playing course. Preferably, the correction factor K further comprises one or more of environmental or meteorological factors and parameters representative of the player's state of health.

In other words, the first processing unit 103 is configured to:
receive the prediction request Prev_Pos_Req, access the database 10, apply a correction factor K to the prediction request signal Prev_Pos_Req as a function of the type of ball P_ball used in the competition playing course, import success values V_WIN_101 obtained with the type of ball used in the practice playing course P_B1j, also applying the correction factor K defined as a function of the type of ball P_ball used in the competition playing course; send to the second processing unit 203 the response signal Prev_Pos_Rep correctly derived from the success value V_WIN_101 as a function of the correction factor K.

According to the invention, with particular reference to Figure 2, the playing data processing subsystem 200 comprises a display interface 204 arranged to display the response signal Prev_Pos_Rep.

Preferably, such interface is a graphic interface showing the selected competition playing course Sel_201 and the shot distance Δd contained in the response signal Prev_Pos_Rep.

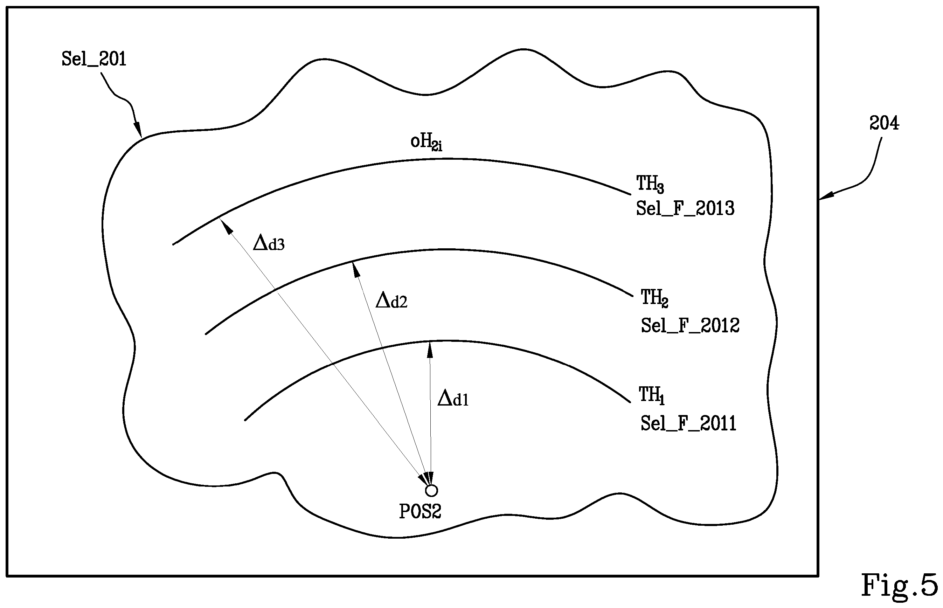

Preferably, with particular reference to Figure 5, the display interface 204 is configured to display the selected competition playing course Sel_201 and a plurality of shot distances Δdi obtained as a function of different selected second irons Sel_F_201i for playing on the competition playing course 201.

According to the invention, the transceiver devices are configured to detect the presence of a golf ball B1j,B2j by means of the first primary transceiver device RT1₀ or secondary RT2₀ as a function of predefined distance thresholds THi (i=1..n) of the ball B1j;B2j from the target H1i and/or the target area H2i.

The success value V_win_101 is therefore defined as a function of a positioning of the golf ball B1j;B2j relative to the detected predefined distance thresholds THi, and a sequence of successive success values V_win_101 determines a corresponding rating signal RG for a player G.

A system of assisted training of a player for the game of golf has been described which achieves the following technical effects:
provides the player with a self-assessment mode;
assesses the degree of learning of the game;
allows the player to transfer the experiences gained when moving to playing on the playing course;
allows the collection of data from all the training sessions normalises and provides the data collected in the sessions when on the playing course.

## Claims

1. A system for assisted training of a player (G) for the game of golf, comprising a playing data generation subsystem (100) in data communication with a playing data processing subsystem (200);
wherein said playing data generation subsystem (100) is associated with a first georeferencing network (NET_100) which maps a training playing course (101) by means of a plurality (n) of primary transceiver devices (RT1ⱼ:j=k..k+n), wherein a first primary transceiver device (RT1₀) is positioned at a primary target (H1i) of said training playing course (101);
wherein said playing data generation subsystem (100) comprises:
a first plurality of golf balls (B1j; j=1..k-1), each provided with one of said primary transceiver devices (RT1ⱼ); j=1..k-1);
a first electronic device (102) arranged for an interfacing between said player (G) and said playing data generation subsystem (100), wherein said first electronic device is in a data connection with a first processing unit (103), wherein the latter is configured to:
recognise said player (G), detect a virtual training playing course (Sel_V_101) selected by said player (G), identify a first position (Pos1) of said player in said training playing course (101), detect first selected irons (Sel_F_101) for playing on the training playing course (101) and associate said plurality of golf balls (B1j; j=1..k-1) with said player (G);
a database (10) arranged to comprise at least data detected by means of said first processing unit (103) and relating to the playing on the selected virtual training playing course (Sel_V_101) for said recognised player (G);
wherein said first processing unit (103) is further configured to
detect a launch of said golf ball (B1j; i=1..k-1) as a function of signals received from said primary transceiver devices (RT1j);
calculate a current success value (V_win_101) of said launch, in said training playing course (101), as a function of the launch that has taken place and a signal received from said first primary transceiver device (RT1₀);
store in said database (10), for said player (G), said current success value (V_win_101) relating to the playing on the selected training playing course (Sel_V_101);
wherein said playing data processing subsystem (200) is associated with a second georeferencing network (NET_200) which maps a competition playing course (201),
wherein said playing data processing subsystem (200) comprises:
at least one golf ball (B2j; j=1..k-1);
a second electronic device (202) arranged for an interfacing between said player (G), said playing data generation subsystem (100) and said playing data processing subsystem (200), wherein said second electronic device (202) is geolocalisable in real time in a playing position (Pos2) on said competition playing course (201);
a second processing unit (203) in data connection with said second electronic device (202), and configured to:
o (203_1) select a competition playing course (Sel_201) from among a list of competition playing courses (list _201), thereby determining a corresponding association with said second georeferencing network (NET_200);
o (203_2) select second irons (sel_F_201) for playing on said competition playing course (201);
o (203_3) Send to said playing data generation subsystem (100) a prediction request signal (Prev_Pos_Req) for predicting a position of said ball (B2j) of said at least one golf ball (B2j; j=1..k-1), in anticipation of a shot in said selected competition playing course (sel_201), and as a function of said selected second irons (Sel_F_201) for playing on said competition playing course (201);
o (203_4) receive from said playing data generation subsystem (100) a response signal (Prev_Pos_Rep) generated as a function of success values (V_WIN_101) for said player (G) on said training playing course (101) with said selected second irons (Sel_F_201) for playing on said competition playing course (201);
o (203_5) calculate a current success value on the playing course (V_WIN_201) as a function of said response signal (Prev_Pos_Rep), said real playing position (Pos2) and said selected competition playing course (sel_201).

2. The system according to claim 1, wherein said second processing unit (203) is configured to send said prediction request signal (Prev_Pos_Req) to said processing unit (103) and said first processing unit (103) is configured to:
receive said prediction request (Prev_Pos_Req);
access said database (10);
import success values (V_WIN_101) for said player (G) obtained with said first irons (Sel_F_101) so that they correspond to said second irons (Sel_F_201);
send said success values (V_WIN_101) to said second processing unit (203) as a response signal (Prev_Pos_Rep).

3. The system according to claim 2, wherein said success values (V_win_101) comprise a log of success values (V_win_OLD) and/or an average (AVG) of the log of the success values (V_win_OLD) and
wherein said response signal (Prev_Pos_Rep) comprises a predicted shot distance (Δd) from said playing position (Pos2) on said competition playing course (201) with said selected second irons (Sel_F_201) for playing on said competition playing course (201).

4. The system according to any one of the preceding claims, wherein said prediction request signal (Prev_Pos_Req) further comprises data relating to the type of ball (P_ball) used in the competition;
and said first processing unit (103) is configured to:
receive said prediction request (Prev_Pos_Req);
access said database (10);
apply a correction factor (K) to said prediction request signal (Prev_Pos_Req) as a function of the type of ball (P_ball) used on the competition playing course,
import said success values (V_WIN_101) obtained with the type of ball used in the practice playing course (P_B1j), also applying the correction factor (K) defined according to the type of ball (P_ball) used on the competition playing course;
send to the second processing unit (203) the response signal (Prev_Pos_Rep) correctly derived from the success value (V_WIN_101) as a function of the correction factor (K).

5. The system according to any one of the preceding claims, wherein said playing data processing subsystem (200) comprises a display interface (204) arranged to display said response signal (Prev_Pos_Rep), preferably a graphic interface that shows said selected competition playing course (Sel_201) and said shot distance (Δd) contained in said response signal (Prev_Pos_Rep), wherein said display interface (204) is configured to display said selected competition playing course (Sel_201) and a plurality of shot distances (Δdi) obtained as a function of different selected second irons (Sel_F_201i) for playing on said competition playing course (201).

6. The system according to any one of the preceding claims, wherein said first processing unit (103) comprises:
a first detection module (103_1) configured to recognise said player (G);
an association module (103_2) configured to associate said plurality of golf balls (Bi; i=1..n) with said player (G);
a second detection module (103_3) configured to detect a virtual training playing course (Sel_V_101) selected by said player (G);
a localisation module (103_4) configured to identify a first position (Pos1) of said player on said training playing course (101);
a third detection module (103_5) configured to detect said first selected irons (Sel_F_101) for playing on the training playing course (101);
a first sending module (103_6) configured to send at least all of the data detected by said modules to said playing data database (10) so that they are logically stored and associated with said player (G);
a fourth detection module (103_7) configured to detect said launch of said golf ball (B1j; i=1..k-1) as a function of signals received from said primary transceiver devices (RT1j);
a first calculation module (103_8) configured to calculate said current success value (V_win_101) of said launch, in said training playing course (101), as a function of the launch that has taken place and said signal received from said first primary transceiver device (RT1₀);
a second sending module (103_9) configured to send to said database (10), for said player (G), said current success value (V_win_101) relating to playing on the selected training playing course (Sel_V_101), so that it is stored.

7. The system according to claim 6, wherein said first processing unit (103) further comprises:
a first loading module (103_10) configured to load a log of success values (V_win_OLD) from said database (10);
a comparison module (103_11) configured to make a comparison between said log of success values (V_win_OLD) and said current success value (V_win_101);
a processing module (103_12) configured to generate a rating signal (RG) for said player (G) as a function of said comparison;
a first receiving module (103_13) configured to receive said prediction request (Prev_Pos_Req);
a second loading module (103_14) configured to access said database (10) and import success values (V_win_101) for said player (G) obtained with said first irons (Sel_F_101) equal to said second irons (Sel_F_201);
preferably, a second calculation module (103_15) configured to calculate an average of said success values (V_win_101);
a third sending module (103_16) configured to send said success values (V_win_101) to said second processing unit as a response signal (Prev_Pos_Rep).

8. The system according to any one of the preceding claims, wherein said electronic device (102,202) comprises a portable electronic device, preferably one of a smartphone, a tablet, a PDA, a smart watch or the like.

9. The system according to any one of the preceding claims, wherein said primary transceiver devices (RT1j) and said secondary transceiver devices (RT2j) are RFID transceivers.

10. The system according to any one of the preceding claims, wherein said second transceiver device (RT1j) is configured to detect the presence of said golf ball (1) via said first transceiver device (RT1₀) as a function of predefined distance thresholds (THi: i=1..n) of said ball (B1j) from said target (H1i).

11. The system according to any one of the preceding claims, wherein said second transceiver device (RT2j) is configured to detect the presence of said golf ball (1) via said first transceiver device (RT2₀) as a function of predefined distance thresholds (THi: i=1..n) of said ball (B2j) from a target area (H2i),
wherein said success value (V_win_101) is defined as a function of a positioning of said golf ball (1) (B1j;B2j) relative to said detected predefined distance thresholds (THi: i=1..n), and a sequence of successive success values (V_win_101) determines a corresponding rating signal (RG) for said player (G).

12. The system according to any one of the preceding claims, ,wherein said playing data processing subsystem (200) is associated with said second georeferencing network (NET_200) which maps said competition playing course (201) by means of a plurality (n) of secondary transceiver devices (RT2ⱼ; j=k..k+n); wherein a first secondary transceiver device (RT2₀) is positioned at said target area (H2i) of said competition playing course (201).

13. The system according to claim 12, wherein said target area (H2i) is a hole of said competition playing course (201).

14. The system according to any one of the preceding claims, wherein said playing data processing subsystem (200) comprises a second plurality of golf balls (B2j; j=1..k-1) each equipped with one of said secondary transceiver devices (RT2ⱼ; j=1..k-1).

15. The system according to any one of the preceding claims, wherein said primary target (H1i) in the training playing course comprises an area of the course on which the player wants the ball to arrive as a result of the shot made, which area can be identified by one or more of a flag, a totem, a text, a coloured rug, a highlighted area or the like,
OR
wherein said primary target (H1i) comprises a hole for golf balls.

## Patentansprüche

1. System für unterstütztes Training eines Spielers (G) für das Golfspiel, umfassend ein Spieldatengenerierungssubsystem (100) in Datenkommunikation mit einem Spieldatenverarbeitungssubsystem (200),
wobei das Spieldatengenerierungssubsystem (100) mit einem ersten Georeferenzierungsnetzwerk (NET_100) assoziiert ist, das einen Trainingsplatz (101) mittels einer Vielzahl (n) von primären Sende-Empfangs-Vorrichtungen (RT1ⱼ:j=k..k+n) vermisst, wobei eine erste primäre Sende-Empfangs-Vorrichtung (RT1₀) an einem primären Ziel (H1i) des Trainingsplatzes (101) positioniert ist,
wobei das Spieldatengenerierungssubsystem (100) Folgendes umfasst:
eine erste Vielzahl von Golfbällen (B1j;j=1..k-1), die jeweils mit einer der primären Sende-Empfangs-Vorrichtungen (RT1ⱼ;j=1..k-1) versehen sind;
eine erste elektronische Vorrichtung (102), die für eine Schnittstellenbildung zwischen dem Spieler (G) und dem Spieldatengenerierungssubsystem (100) angeordnet ist, wobei die erste elektronische Vorrichtung in einer Datenverbindung mit einer ersten Verarbeitungseinheit (103) ist, wobei letztere ausgelegt ist, um
den Spieler (G) zu erkennen, einen von dem Spieler (G) ausgewählten virtuellen Trainingsplatz (Sel_V_101) zu detektieren, eine erste Position (Pos1) des Spielers in dem Trainingsplatz (101) zu identifizieren, erste ausgewählte Eisen (Sel_F_101) zum Spielen auf dem Trainingsplatz (101) zu detektieren und die Vielzahl von Golfbällen (B1j; j=1..k-1) mit dem Spieler (G) zu assoziieren;
eine Datenbank (10), die angeordnet ist, um mindestens Daten zu umfassen, die mittels der ersten Verarbeitungseinheit (103) detektiert wurden und sich auf das Spielen auf dem ausgewählten virtuellen Trainingsplatz (Sel_V_101) für den erkannten Spieler (G) beziehen,
wobei die erste Verarbeitungseinheit (103) ferner ausgelegt ist, um einen Abschlag des Golfballs (B1j;
i=1..k-1) abhängig von von den primären Sende-Empfangs-Vorrichtungen (RT1j) empfangenen Signalen zu detektieren;
einen aktuellen Erfolgswert (V_win_101) des Abschlags in dem Trainingsplatz (101) abhängig von dem stattgefundenen Abschlag und einem von der ersten primären Sende-Empfangs-Vorrichtung (RT1₀) empfangenen Signal zu berechnen;
den aktuellen Erfolgswert (V_win_101), der sich auf das Spielen auf dem ausgewählten Trainingsplatz (Sel_V_101) bezieht, in der Datenbank (10) für den Spieler (G) zu speichern,
wobei das Spieldatenverarbeitungssubsystem (200) mit einem zweiten Georeferenzierungsnetzwerk (NET_200) assoziiert ist, das einen Wettkampfplatz (201) vermisst,
wobei das Spieldatenverarbeitungssubsystem (200) Folgendes umfasst:
mindestens einen Golfball (B2j; j=1..k-1);
eine zweite elektronische Vorrichtung (202), die für eine Schnittstellenbildung zwischen dem Spieler (GG), dem Spieldatengenerierungssubsystem (100) und dem Spieldatenverarbeitungssubsystem (200) angeordnet ist, wobei die zweite elektronische Vorrichtung (202) in einer Spielposition (Pos2) auf dem Wettkampfplatz (201) in Echtzeit geolokalisierbar ist;
eine zweite Verarbeitungseinheit (203) in Datenverbindung mit der zweiten elektronischen Vorrichtung (202) und ausgelegt, um
o (203_1) einen Wettkampfplatz (Sel_201) aus einer Liste von Wettkampfplätzen (list_201) auszuwählen, wodurch eine entsprechende Assoziation mit dem zweiten Georeferenzierungsnetzwerk (NET_200) bestimmt wird;
o (203_2) zweite Eisen (sel_F_201) zum Spielen auf dem Wettkampfplatz (201) auszuwählen;
o (203_3) dem Spieldatengenerierungssubsystem (100) ein Prognoseanforderungssignal (Prev_Pos_Req) zu senden, um eine Position des Balls (B2j) des mindestens einen Golfballs (B2j; j=1..k-1) unter Vorwegnahme eines Schlags in dem ausgewählten Wettkampfplatz (sel_201) und abhängig von den ausgewählten zweiten Eisen (Sel_F_201) zum Spielen auf dem Wettkampfplatz (201) zu prognostizieren;
o (203_4) von dem Spieldatengenerierungssubsystem (100) ein Antwortsignal (Prev_Pos_Rep) zu empfangen, das abhängig von Erfolgswerten (V_WIN_101) für den Spieler (G) auf dem Trainingsplatz (101) mit den ausgewählten zweiten Eisen (Sel_F_201) für das Spielen auf dem Wettkampfplatz (201) generiert wurde;
o (203_5) einen aktuellen Erfolgswert auf dem Platz (V_WIN_201) abhängig von dem Antwortsignal (Prev_Pos_Rep), der realen Spielposition (Pos2) und dem ausgewählten Wettkampfplatz (sel_201) zu berechnen.

2. System nach Anspruch 1, wobei die zweite Verarbeitungseinheit (203) ausgelegt ist, um das Prognoseanforderungssignal (Prev_Pos_Req) an die Verarbeitungseinheit (103) zu senden und die erste Verarbeitungseinheit (103) ausgelegt ist, um
die Prognoseanforderung (Prev_Pos_Req) zu empfangen;
auf die Datenbank (10) zuzugreifen;
mit den ersten Eisen (Sel_F_101) erlangte Erfolgswerte (V_WIN_101) für den Spieler (G) zu importieren, sodass diese den zweiten Eisen (Sel_F_201) entsprechen;
die Erfolgswerte (V_WIN_101) als Antwortsignal (Prev_Pos_Rep) an die zweite Verarbeitungseinheit (203) zu senden.

3. System nach Anspruch 2, wobei die Erfolgswerte (V_win_101) ein Protokoll von Erfolgswerten (V_win_OLD) und/oder einen Mittelwert (AVG) des Protokolls der Erfolgswerte (V_win_OLD) umfassen, und
wobei das Antwortsignal (Prev_Pos_Rep) eine prognostizierte kurze Entfernung (Δd) von der Spielposition (Pos2) auf dem Wettkampfplatz (201) mit den ausgewählten zweiten Eisen (Sel_F_201) zum Spielen auf dem Wettkampfplatz (201) umfasst.

4. System nach einem der vorhergehenden Ansprüche, wobei das Prognoseanforderungssignal (Prev_Pos_Req) ferner Daten umfasst, die sich auf den beim Wettkampf genutzten Balltyp (P_ball) beziehen,
und die erste Verarbeitungseinheit (103) ausgelegt ist, um
die Prognoseanforderung (Prev_Pos_Req) zu empfangen;
auf die Datenbank (10) zuzugreifen;
einen Korrekturfaktor (K) auf das Prognoseanforderungssignal (Prev_Pos_Req) abhängig vom auf dem Wettkampfplatz genutzten Balltyp (P_ball) anzuwenden;
die mit dem im Übungsplatz (P_B1j) genutzten Balltyp erlangten Erfolgswerte (V_WIN_101) auch unter Anwendung des gemäß dem auf dem Wettkampfplatz genutzten Balltyp (P_ball) definierten Korrekturfaktors zu importieren;
das korrekt von dem Erfolgswert (V_WIN_101) abhängig von dem Korrekturfaktor (K) abgeleitete Antwortsignal (Prev_Pos_Rep) an die zweite Verarbeitungseinheit (203) zu senden.

5. System nach einem der vorhergehenden Ansprüche, wobei das Spieldatenverarbeitungssubsystem (200) eine Anzeigeschnittstelle (204) umfasst, die angeordnet ist, um das Antwortsignal (Prev_Pos_Rep) anzuzeigen, vorzugsweise eine grafische Schnittstelle, die den ausgewählten Wettkampfplatz (Sel_201) und die in dem Antwortsignal (Prev_Pos_Rep) enthaltene kurze Entfernung (Δd) zeigt, wobei die Anzeigeschnittstelle (204) ausgelegt ist, um den ausgewählten Wettkampfplatz (Sel_201) und eine Vielzahl von abhängig von unterschiedlichen ausgewählten zweiten Eisen (Sel_F_201i) erlangten kurzen Entfernungen (Δdi) zum Spielen auf dem Wettkampfplatz (201) anzuzeigen.

6. System nach einem der vorhergehenden Ansprüche, wobei die erste Verarbeitungseinheit (103) Folgendes umfasst:
ein erstes Detektionsmodul (103_1), das ausgelegt ist, um den Spieler (G) zu erkennen;
ein Assoziationsmodul (103_2), das ausgelegt ist, um die Vielzahl von Golfbällen (Bi; i=1..n) mit dem Spieler (G) zu assoziieren;
ein zweites Detektionsmodul (103_3), das ausgelegt ist, um einen vom Spieler (G) ausgewählten virtuellen Trainingsplatz (Sel_V_101) zu detektieren;
ein Lokalisierungsmodul (103_4), das ausgelegt ist, um eine erste Position (Pos1) des Spielers auf dem Trainingsplatz (101) zu identifizieren;
ein drittes Detektionsmodul (103_5), das ausgelegt ist, um die ersten ausgewählten Eisen (Sel_F_101) zum Spielen auf dem Trainingsplatz (101) zu detektieren;
ein erstes Sendemodul (103_6), das ausgelegt ist, um mindestens alle der von den Modulen detektierten Daten an die Spieldatendatenbank (10) zu senden, sodass diese logisch gespeichert und mit dem Spieler (G) assoziiert werden;
ein viertes Detektionsmodul (103_7), das ausgelegt ist, um den Abschlag des Golfballs (B1j; i=1..k-1) abhängig von von den primären Sende-Empfangs-Vorrichtungen (RT1j) empfangenen Signalen zu detektieren;
ein erstes Kalkulationsmodul (103_8), das ausgelegt ist, um den aktuellen Erfolgswert (V_win_101) des Abschlags in dem Trainingsplatz (101) abhängig von dem stattgefundenen Abschlag und dem von der ersten primären Sende-Empfangs-Vorrichtung (RT1₀) empfangenen Signal zu berechnen;
ein zweites Sendemodul (103_9), das ausgelegt ist, um den aktuellen Erfolgswert (V_win_101), der sich auf das Spielen auf dem ausgewählten Trainingsplatz (Sel_V_101) bezieht, an die Datenbank (10) für den Spieler (G) zu senden, sodass dieser gespeichert wird.

7. System nach Anspruch 6, wobei die erste Verarbeitungseinheit (103) ferner Folgendes umfasst:
ein erstes Lademodul (103_10), das ausgelegt ist, um ein Protokoll von Erfolgswerten (V_win_OLD) aus der Datenbank (10) zu laden;
ein Vergleichsmodul (103_11), das ausgelegt ist, um einen Vergleich zwischen dem Protokoll von Erfolgswerten (V_win_OLD) und dem aktuellen Erfolgswert (V_win_101) anzustellen;
ein Verarbeitungsmodul (103_12), das ausgelegt ist, um ein Bewertungssignal (RG) für den Spieler (G) abhängig von dem Vergleich zu generieren;
ein erstes Empfangsmodul (103_13), das ausgelegt ist, um die Prognoseanforderung (Prev_Pos_Req) zu empfangen;
ein zweites Lademodul (103_14), das ausgelegt ist, um auf die Datenbank (10) zuzugreifen und Erfolgswerte (V_win_101) für den Spieler (G) zu importieren, die mit den ersten Eisen (Sel_F_101) erlangt wurden und gleich den zweiten Eisen (Sel_F_201) sind;
vorzugsweise ein zweites Kalkulationsmodul (103_15), das ausgelegt ist, um einen Mittelwert der Erfolgswerte (V_win_101) zu berechnen;
ein drittes Sendemodul (103_16), das ausgelegt ist, um die Erfolgswerte (V_win_101) als Antwortsignal (Prev_Pos_Rep) an die zweite Verarbeitungseinheit zu senden.

8. System nach einem der vorhergehenden Ansprüche, wobei die elektronische Vorrichtung (102, 202) eine tragbare elektronische Vorrichtung umfasst, bei der es sich vorzugsweise um eine der folgenden handelt: ein Smartphone, ein Tablet, ein PDA, eine Smartwatch oder dergleichen.

9. System nach einem der vorhergehenden Ansprüche, wobei die primären Sende-Empfangs-Vorrichtungen (RT1j) und die sekundären Sende-Empfangs-Vorrichtungen (RT2j) RFID-Sende-Empfangs-Einheiten sind.

10. System nach einem der vorhergehenden Ansprüche, wobei die zweite Sende-Empfangs-Vorrichtung (RT1j) ausgelegt ist, um die Anwesenheit des Golfballs (1) über die erste Sende-Empfangs-Vorrichtung (RT1₀) abhängig von vordefinierten Entfernungsschwellenwerten (THi: i=1..n) des Balls (B1j) vom Ziel (H1i) zu detektieren.

11. System nach einem der vorhergehenden Ansprüche, wobei die zweite Sende-Empfangs-Vorrichtung (RT2j) ausgelegt ist, um die Anwesenheit des Golfballs (1) über die erste Sende-Empfangs-Vorrichtung (RT2₀) abhängig von vordefinierten Entfernungsschwellenwerten (THi: i=1..n) des Balls (B2j) von einem Zielbereich (H2i) zu detektieren,
wobei der Erfolgswert (V_win_101) abhängig von einem Positionieren des Golfballs (1) (B1j; B2j) relativ zu den detektierten vordefinierten Entfernungsschwellenwerten (THi: i=1..n) definiert wird und eine Abfolge von aufeinanderfolgenden Erfolgswerten (V_win_101) ein entsprechendes Bewertungssignal (RG) für den Spieler (G) bestimmt.

12. System nach einem der vorhergehenden Ansprüche, wobei das Spieldatenverarbeitungssubsystems (200) mit dem zweiten Georeferenzierungsnetzwerk (NT_200) assoziiert ist, das den Wettkampfplatz (201) mittels einer Vielzahl (n) von sekundären Sende-Empfangs-Vorrichtungen (RT2ⱼ; j=k..k+n) vermisst, wobei eine erste sekundäre Sende-Empfangs-Vorrichtung (RT2₀) an dem Zielbereich (H2i) des Wettkampfplatzes (201) positioniert ist.

13. System nach Anspruch 12, wobei der Zielbereich (H2i) ein Loch des Wettkampfplatzes (201) ist.

14. System nach einem der vorhergehenden Ansprüche, wobei das Spieldatenverarbeitungssubsystem (200) eine zweite Vielzahl von Golfbällen (B2j; j=1..k-1) umfasst, die jeweils mit einer der sekundären Sende-Empfangs-Vorrichtungen (RT2ⱼ; j=1..k-1) ausgestattet sind.

15. System nach einem der vorhergehenden Ansprüche, wobei das primäre Ziel (H1i) in dem Trainingsplatz einen Bereich des Platzes umfasst, auf dem der Spieler den Ball infolge des durchgeführten Schlags platzieren möchte, wobei dieser Bereich durch eines oder mehrere der folgenden Elemente identifiziert sein kann: eine Fahne, ein Totem, einen Text, einen farbigen Teppich,
einen gekennzeichneten Bereich oder dergleichen,
ODER
wobei das primäre Ziel (H1i) ein Loch für Golfbälle umfasst.

## Revendications

1. Système d'aide à l'entraînement pour joueur (G) de golf, comprenant un sous-système de génération de données de jeu (100) en communication de données avec un sous-système de traitement de données de jeu (200) ;
dans lequel ledit sous-système de génération de données de jeu (100) est associé à un premier réseau de géoréférencement (NET_100) qui cartographie un parcours de jeu d'entraînement (101) au moyen d'une pluralité (n) de dispositifs émetteurs-récepteurs primaires (RT1j:j=k..k+n), dans lequel un premier dispositif émetteur-récepteur primaire (RT1₀) est positionné au niveau d'une cible primaire (H1i) dudit parcours de jeu d'entraînement (101) ;
dans lequel ledit sous-système de génération de données de jeu (100) comprend :
une première pluralité de balles de golf (B1j; j=1..k-1), chacune munie d'un desdits dispositifs émetteurs-récepteurs primaires (RT1ⱼ; j=1..k-1) ;
un premier dispositif électronique (102) agencé pour un interfaçage entre ledit joueur (G) et ledit sous-système de génération de données de jeu (100), dans lequel ledit premier dispositif électronique est dans une connexion de données avec une première unité de traitement (103), dans lequel cette dernière est configurée pour :
reconnaître ledit joueur (G), détecter un parcours de jeu d'entraînement virtuel (Sel_V_101) sélectionné par ledit joueur (G), identifier une première position (Pos1) dudit joueur dans ledit parcours de jeu d'entraînement (101), détecter les premiers fers sélectionnés (Sel_F_101) pour jouer sur le parcours de jeu d'entraînement (101) et associer ladite pluralité de balles de golf (B1j; j=1..k-1) audit joueur (G) ;
une base de données (10) agencée pour comprendre au moins des données détectées au moyen de ladite première unité de traitement (103) et relatives au jeu sur le parcours de jeu d'entraînement virtuel sélectionné (Sel_V_101) pour ledit joueur reconnu (G) ;
dans lequel ladite première unité de traitement (103) est en outre configurée pour détecter un lancement de ladite balle de golf (B1j; i=1..k-1) en fonction des signaux reçus desdits dispositifs émetteurs-récepteurs primaires (RT1j) ;
calculer une valeur de succès actuelle (V_win_101) dudit lancement, dans ledit parcours de jeu d'entraînement (101), en fonction du lancement qui a eu lieu et d'un signal reçu dudit premier dispositif émetteur-récepteur primaire (RT1₀) ;
stocker dans ladite base de données (10), pour ledit joueur (G), ladite valeur de succès actuelle (V_win_101) relative au jeu sur le parcours de jeu d'entraînement sélectionné (Sel_V_101) ;
dans lequel ledit sous-système de traitement de données de jeu (200) est associé à un second réseau de géoréférencement (NET_200) qui cartographie un parcours de jeu de compétition (201),
dans lequel ledit sous-système de traitement de données de jeu (200) comprend :
au moins une balle de golf (B2j; j=1..k-1) ;
un second dispositif électronique (202) agencé pour un interfaçage entre ledit joueur (G), ledit sous-système de génération de données de jeu (100) et ledit sous-système de traitement de données de jeu (200), dans lequel ledit second dispositif électronique (202) est géolocalisable en temps réel dans une position de jeu (Pos2) sur ledit parcours de jeu de compétition (201) ;
une seconde unité de traitement (203) en connexion de données avec ledit second dispositif électronique (202), et configurée pour :
o (203_1) sélectionner un parcours de jeu de compétition (Sel_201) parmi une liste de parcours de jeu de compétition (list_201),
déterminant ainsi une association correspondante avec ledit second réseau de géoréférencement (NET_200) ;
o (203_2) sélectionner des seconds fers (sel_F_201) pour jouer sur ledit parcours de jeu de compétition (201) ;
o (203_3) envoyer audit sous-système de génération de données de jeu (100) un signal de demande de prédiction (Prev_Pos_Req) pour prédire une position de ladite balle (B2j) de ladite au moins une balle de golf (B2j; j=1..k-1), en prévision d'un tir dans ledit parcours de jeu de compétition sélectionné (sel_201), et en fonction desdits seconds fers sélectionnés (Sel_F_201) pour jouer sur ledit parcours de jeu de compétition (201) ;
o (203_4) recevoir dudit sous-système de génération de données de jeu (100) un signal de réponse (Prev_Pos_Rep) généré en fonction des valeurs de succès (V_WIN_101) pour ledit joueur (G) sur ledit parcours de jeu d'entraînement (101) avec lesdits seconds fers sélectionnés (Sel_F_201) pour jouer sur ledit parcours de jeu de compétition (201) ;
o (203_5) calculer une valeur de succès actuelle sur le parcours de jeu (V_WIN_201) en fonction dudit signal de réponse (Prev_Pos_REP), de ladite position de jeu réelle (Pos2) et dudit parcours de jeu de compétition sélectionné (sel_201).

2. Système selon la revendication 1, dans lequel ladite seconde unité de traitement (203) est configurée pour envoyer ledit signal de demande de prédiction (Prev_Pos_Req) à ladite unité de traitement (103) et ladite première unité de traitement (103) est configurée pour :
recevoir ladite demande de prédiction (Prev_Pos_Req) ;
accéder à ladite base de données (10) ;
importer des valeurs de succès (V_WIN_101) pour ledit joueur (G) obtenues avec lesdits premiers fers (Sel_F_101) de sorte qu'elles correspondent auxdits seconds fers (Sel_F_201) ;
envoyer lesdites valeurs de succès (V_WIN_101) à ladite seconde unité de traitement (203) en tant que signal de réponse (Prev_Pos_Rep).

3. Système selon la revendication 2, dans lequel lesdites valeurs de succès (V_win_101) comprennent un journal des valeurs de succès (V_win_OLD) et/ou une moyenne (AVG) du journal des valeurs de succès (V_win_OLD) et
dans lequel ledit signal de réponse (Prev_Pos_Rep) comprend une distance de tir prédite (Δd) à partir de ladite position de jeu (Pos2) sur ledit parcours de jeu de compétition (201) avec lesdits seconds fers sélectionnés (Sel_F_201) pour jouer sur ledit parcours de jeu de compétition (201).

4. Système selon l'une quelconque des revendications précédentes, dans lequel ledit signal de demande de prédiction (Prev_Pos_Req) comprend en outre des données relatives au type de balle (P_ball) utilisé dans la compétition ;
et ladite première unité de traitement (103) est configurée pour :
recevoir ladite demande de prédiction (Prev_Pos_Req) ;
accéder à ladite base de données (10) ;
appliquer un facteur de correction (K) audit signal de demande de prédiction (Prev_Pos_Req) en fonction du type de balle (P_ball) utilisé sur le parcours de jeu de compétition,
importer lesdites valeurs de succès (V_WIN_101) obtenues avec le type de balle utilisé dans le parcours de jeu d'entraînement (P_B1j), en appliquant également le facteur de correction (K) défini en fonction du type de balle (P_ball) utilisé sur le parcours de jeu de compétition ;
envoyer à la seconde unité de traitement (203) le signal de réponse (Prev_Pos_Rep) correctement dérivé de la valeur de succès (V_WIN_101) en fonction du facteur de correction (K).

5. Système selon l'une quelconque des revendications précédentes, dans lequel ledit sous-système de traitement de données de jeu (200) comprend une interface d'affichage (204) agencée pour afficher ledit signal de réponse (Prev_Pos_Rep), de préférence une interface graphique qui montre ledit parcours de jeu de compétition sélectionné (Sel_201) et ladite distance de tir (Δd) contenue dans ledit signal de réponse (Prev_Pos_Rep), dans lequel ladite interface d'affichage (204) est configurée pour afficher ledit parcours de jeu de compétition sélectionné (Sel_201) et une pluralité de distances de tir (Δdi) obtenues en fonction de seconds fers sélectionnés différents (Sel_F_201i) pour jouer sur ledit parcours de jeu de compétition (201).

6. Système selon l'une quelconque des revendications précédentes, dans lequel ladite première unité de traitement (103) comprend :
un premier module de détection (103_1) configuré pour reconnaître ledit joueur (G) ;
un module d'association (103_2) configuré pour associer ladite pluralité de balles de golf (Bi; i=1..n) audit joueur (G) ;
un second module de détection (103_3) configuré pour détecter un parcours de jeu d'entraînement virtuel (Sel_V_101) sélectionné par ledit joueur (G) ;
un module de localisation (103_4) configuré pour identifier une première position (Pos1) dudit joueur sur ledit parcours de jeu d'entraînement (101) ;
un troisième module de détection (103_5) configuré pour détecter lesdits premiers fers sélectionnés (Sel_F_101) pour jouer sur le parcours de jeu d'entraînement (101) ;
un premier module d'envoi (103_6) configuré pour envoyer au moins toutes les données détectées par lesdits modules à ladite base de données de jeu (10) de sorte qu'elles soient logiquement stockées et associées audit joueur (G) ;
un quatrième module de détection (103_7) configuré pour détecter ledit lancement de ladite balle de golf (B1j;
i=1..k-1) en fonction des signaux reçus desdits dispositifs émetteurs-récepteurs primaires (RT1j) ;
un premier module de calcul (103_8) configuré pour calculer ladite valeur de succès actuelle (V_win_101) dudit lancement, dans ledit parcours de jeu d'entraînement (101), en fonction du lancement qui a eu lieu et dudit signal reçu dudit premier dispositif émetteur-récepteur primaire (RT1₀) ;
un second module d'envoi (103_9) configuré pour envoyer à ladite base de données (10), pour ledit joueur (G), ladite valeur de succès actuelle (V_win_101) relative au jeu sur le parcours de jeu d'entraînement sélectionné (Sel_V_101), de sorte qu'elle soit stockée.

7. Système selon la revendication 6, dans lequel ladite première unité de traitement (103) comprend en outre :
un premier module de chargement (103_10) configuré pour charger un journal des valeurs de succès (V_win_OLD) à partir de ladite base de données (10) ;
un module de comparaison (103_11) configuré pour faire une comparaison entre ledit journal des valeurs de succès (V_win_OLD) et ladite valeur de succès actuelle (V_win_101) ;
un module de traitement (103_12) configuré pour générer un signal de classement (RG) pour ledit joueur (G) en fonction de ladite comparaison ;
un premier module de réception (103_13) configuré pour recevoir ladite demande de prédiction (Prev_Pos_Req) ;
un second module de chargement (103_14) configuré pour accéder à ladite base de données (10) et importer des valeurs de succès (V_win_101) pour ledit joueur (G) obtenues avec lesdits premiers fers (Sel_F_101) égaux auxdits seconds fers (Sel_F_201) ;
de préférence, un second module de calcul (103_15) configuré pour calculer une moyenne desdites valeurs de succès (V_win_101) ;
un troisième module d'envoi (103_16) configuré pour envoyer lesdites valeurs de succès (V_win_101) à ladite seconde unité de traitement en tant que signal de réponse (Prev_Pos_Rep).

8. Système selon l'une quelconque des revendications précédentes, dans lequel ledit dispositif électronique (102,202) comprend un dispositif électronique portable, de préférence l'un d'un smartphone, d'une tablette, d'un PDA, d'une montre intelligente ou similaire.

9. Système selon l'une quelconque des revendications précédentes, dans lequel lesdits dispositifs émetteurs-récepteurs primaires (RT1j) et lesdits dispositifs émetteurs-récepteurs secondaires (RT2j) sont des émetteurs-récepteurs RFID.

10. Système selon l'une quelconque des revendications précédentes, dans lequel ledit second dispositif émetteur-récepteur (RT1j) est configuré pour détecter la présence de ladite balle de golf (1) via ledit premier dispositif émetteur-récepteur (RT1₀) en fonction de seuils de distance prédéfinis (THi: i=1..n) de ladite balle (B1j) par rapport à ladite cible (H1i).

11. Système selon l'une quelconque des revendications précédentes, dans lequel ledit second dispositif émetteur-récepteur (RT2j) est configuré pour détecter la présence de ladite balle de golf (1) via ledit premier dispositif émetteur-récepteur (RT2₀) en fonction de seuils de distance prédéfinis (THi: i=1..n) de ladite balle (B2j) par rapport à une zone cible (H2i),
dans lequel ladite valeur de succès (V_win_101) est définie en fonction d'un positionnement de ladite balle de golf (1) (B1j; B2j) par rapport auxdits seuils de distance prédéfinis détectés (THi: i=1..n), et une séquence de valeurs de succès successives (V_win_101) détermine un signal de classement correspondant (RG) pour ledit joueur (G).

12. Système selon l'une quelconque des revendications précédentes, dans lequel ledit sous-système de traitement de données de jeu (200) est associé audit second réseau de géoréférencement (NET_200) qui cartographie ledit parcours de jeu de compétition (201) au moyen d'une pluralité (n) de dispositifs émetteurs-récepteurs secondaires (RT2ⱼ; j=k..k+n) ; dans lequel un premier dispositif émetteur-récepteur secondaire (RT2₀) est positionné au niveau de ladite zone cible (H2i) dudit parcours de jeu de compétition (201).

13. Système selon la revendication 12, dans lequel ladite zone cible (H2i) est un trou dudit parcours de jeu de compétition (201).

14. Système selon l'une quelconque des revendications précédentes, dans lequel ledit sous-système de traitement de données de jeu (200) comprend une seconde pluralité de balles de golf (B2j; j=1..k-1) chacune équipée d'un desdits dispositifs émetteurs-récepteurs secondaires (RT2ⱼ; j=1..k-1).

15. Système selon l'une quelconque des revendications précédentes, dans lequel ladite cible principale (H1i) dans le parcours de jeu d'entraînement comprend une zone du parcours sur laquelle le joueur veut que la balle arrive à la suite du tir effectué, laquelle zone peut être identifiée par un ou plusieurs parmi un drapeau, un totem, un texte, un tapis coloré, une zone surlignée ou similaire,
OU
dans lequel ladite cible primaire (H1i) comprend un trou pour des balles de golf.
